# EUROPEAN PATENT APPLICATION

(11) **EP 4 151 409 A1**
(43) Date of publication of application: **22.03.2023**
(21) Application number: 21020471.5
(22) Date of filing: 21.09.2021
(51) Int. Cl.: B33Y 70/00, B33Y 80/00, C04B 40/06

(54) **DRY CEMENTITIOUS MATERIAL MIXTURE FOR 3D-PRINTING**

(71) Applicant: Holcim Technology Ltd, 6300 Zug (CH)
(72) Inventor: LABYAD, Abdelaziz, 38070 Saint Quentin Fallavier (FR); DUCHAND, Sylvain, 38070 Saint Quentin Fallavier (FR); BLACHIER, Christian, 38070 Saint Quentin Fallavier (FR); RÉGNAULT DE LA MOTHE, Loïc, 38070 Saint Quentin Fallavier (FR); LOMBOIS-BURGER, Hélène, 38070 Saint Quentin Fallavier (FR)
(74) Representative: Keschmann, Marc

(57) **Abstract**

A dry cementitious material mixture for 3D-printing, comprising: a hydraulic cement, a fine mineral component having a BET-specific surface area of 0.5-30 m2/g, preferably 5-15 m2/g, and being present in an amount of 3-50 %, preferably 3-30 %, by weight based on the hydraulic cement, an additional material being one of: at least one viscosity enhancing admixture being present in an amount of 0.01-1.5 % by weight, preferably 0.1-0.5 % by weight, based on the hydraulic cement, clay being present in an amount of 0.01-5.0 %, preferably 0.5-1 %, by weight based on the hydraulic cement, and further optionally comprising aggregates.

## Description

The invention refers to a dry cementitious material mixture for 3D-printing and to a fresh mortar or concrete composition for 3D-printing, obtainable by mixing the dry cementitious material mixture and water.

Further, the invention refers to a method of placing a fresh mortar or concrete composition for building structural components layer-by-layer, such as for 3D printing.

3D printing is a building technique that is commonly called "additive manufacturing" and consists of joining material to produce objects, layer upon layer, from 3D model data or other electronic data source. In particular, successive layers of material are formed under computer control by means of an industrial robot. It has already been proposed to develop 3D printers capable of producing structural buildings from a construction material that can be a mortar or a concrete. According to these proposals, the construction material is extruded through a nozzle to build structural components layer-by-layer without the use of formwork or any subsequent vibration. The possibility to build structures without formwork is a major advantage in terms of production rate, architectural freedom and cost reduction.

Usually, 3D printing of construction materials is a continuous process that comprises conveying fresh concrete, mortar or micro-mortar to a deposition head and placing the construction material through an outlet of the deposition head in order to form a layer of concrete. While placing the concrete, the mortar or the micro-mortar, the deposition head is moved under computer control in order to create a layer of construction material in accordance with the underlying 3D model. In particular, the deposition head places a ribbon of fresh concrete or mortar material. For allowing the fresh concrete or mortar to be moved smoothly through each part of the delivery process to the deposition head, a consistent rheology of the fresh material must be safeguarded.

However, the construction material must not only be sufficiently fluid for conveying and extrusion purposes, but also sufficiently firm in order to provide the required mechanical stability of the 3D printed structure before the hydraulic binder sets. In particular, the lower layers of the construction material should sustain the load imposed by upper layers without collapsing or deforming.

Therefore, a flowable construction material adapted for 3D printing typically contains a considerable amount of a hydraulic binder that has a short initial setting time, such as an aluminate cement. However, a binder having a short initial setting time will increase the risk that material builds up in the mixing devices, pumps, and in the printing head.

Another aspect to be considered is the printing speed. A high printing speed is needed for reducing construction time and to ensure an adequate interlayer adhesion. This is in some cases achieved by using a hydraulic binder that has a short initial setting time, as the deposed material will harden quickly and be able to support the layers that are subsequently deposited.

3d printed elements also require a strong bonding strength between the deposited layers, to ensure an adequate overall strength of the 3d printed structure. For this purpose, it is beneficial to place a layer while the preceding layer is still fresh. However, with a hydraulic binder having a short initial setting time the operational flexibility is very limited.

From the point of view of operational flexibility, it would be desirable to have a flowable construction material that has a long initial setting time, i.e. a constant consistency that does not increase too much with time, because this would allow to have more time for adjustments of the printing process, such as for changing printing parameters during the construction.

To accommodate some of the above requirements, it has been proposed to add various admixtures to the flowable construction material in the deposition head immediately before the material is placed through an outlet of the deposition head. This allows to separately optimize the material characteristics for the process of pumping the material to the deposition head and for the process of placing the material layer by layer. In particular, the construction material can be designed to have a low plastic viscosity and a low yield stress for a good pumpability, and is adjusted to obtain the material properties that are desired for the placing process by adding a suitable admixture in the deposition head.

For example, WO 2017/221058 A1 discloses adding a rheology modifying agent to the flowable construction material in the deposition head so as to increase the yield stress.

WO 2017/149040 A1 discloses a system, wherein a setting accelerator is added to the material in the deposition head so that the material sets quickly once having been placed. WO 2018/083010 A1 discloses a multi-component mortar system based on an aluminous cement mixed with at least one set inhibitor so that mortar may be stored in its fresh state for several days or weeks, wherein an initiator system is added to the mortar in the deposition head immediately before being placed, in order to de-block the effect of the inhibitor.

However, adding an admixture to the material in the deposition head involves several disadvantages, such as related to the need to control the admixing process including accurately controlling the dosage of the admixture, and related to the complex additional equipment needed on the deposition head, which increases the weight and thus the maneuverability as well as the costs of the deposition head.

Therefore, the instant invention aims at improving a printable hydraulic construction material so as to overcome the above-mentioned problems.

In order to solve this object, the invention according to a first aspect thereof provides a dry cementitious material mixture for 3D-printing, comprising
- a hydraulic cement,
- a fine mineral component having a BET-specific surface area of 0.5-30 m²/g, preferably 5-15 m²/g, and being present in an amount of 3-50 %, preferably 3-30 %, by weight based on the hydraulic cement,
- an additional material being one of:
   - at least one viscosity enhancing admixture being present in an amount of 0.01-1.5 % by weight, preferably 0.1-0.5 % by weight, based on the hydraulic cement,
   - clay being present in an amount of 0.01-5.0 %, preferably 0.5-1 %, by weight based on the hydraulic cement,
- optionally aggregates.

Thus, the invention provides a dry mix that contains all the ingredients and admixtures that are needed for obtaining a fresh mortar or concrete when being mixed with water. The dry mix is ready to be used and only water needs to be added prior to the printing process. Therefore, contrary to the prior art cited above, no admixtures need to be added at the deposition head.

The invention allows concrete manufacturers to produce 3D printing mortar or concrete using only one dry mixture, instead of mixing various components on site. Customer benefits are regularity of the quality of the mortar or concrete produced and ease-of-use, which leads to cost savings. This in turns enables that non-stop continuous production can be achieved to produce high structures by 3d printing.

Due to the cementitious material mixture being in the form of a dry mix, all components thereof are present in dry form. In particular, the hydraulic cement, the fine mineral component and the additional material (the at least one viscosity enhancing admixture or the clay) are present in powder form.

The dry mix according to the invention contains all admixtures needed for producing a fresh mortar or concrete that has the desired properties for 3D printing. In particular, the dry mix contains a fine mineral component. The fine mineral component, in combination with the additional material, increases the viscosity and thus ensures the thixotropy and/or yield strength development before setting begins, i.e. from just after mixing with water up to typically 30-60 minutes thereafter.

The additional material contained in the dry cementitious material mixture of the invention is either a viscosity enhancing admixture or clay. Therefore, the invention comprises two alternative mixture designs:
a) A dry cementitious material mixture comprising:
   - a hydraulic cement,
   - a fine mineral component having a BET-specific surface area of 0.5-30 m²/g, preferably 5-15 m²/g, and being present in an amount of 3-50 %, preferably 3-30 %, by weight based on the hydraulic cement,
   - at least one viscosity enhancing admixture being present in an amount of 0.01-1.5 % by weight, preferably 0.1-0.5 % by weight, based on the hydraulic cement,
   - optionally aggregates.
This mixture does not contain clay.
b) A dry cementitious material mixture comprising:
   - a hydraulic cement,
   - a fine mineral component having a BET-specific surface area of 0.5-30 m²/g, preferably 5-15 m²/g, and being present in an amount of 3-50 %, preferably 3-30 %, by weight based on the hydraulic cement,
   - clay being present in an amount of 0.01-5.0 %, preferably 0.5-1 %, by weight based on the hydraulic cement,
   - optionally aggregates.
This mixture does not contain a viscosity enhancing admixture as defined herein.
The clay used in this mixture is not a calcined clay.

It has surprisingly been found that the combination of a fine mineral component with either a viscosity enhancing admixture or a clay results in a synergistic effect and increases the yield strength of the fresh mortar or concrete composition to a greater extent than would be expected based on the sum of the yield strength effect of each component separately.

Due to its increased viscosity the fresh mortar or concrete is sufficiently firm in order to provide the required mechanical stability of the 3D printed structure before the hydraulic cement sets. In particular, the lower layers of the construction can sustain the load imposed by upper layers without collapsing.

Due to the combined effect brought about by the fine mineral component and the additional material, the material mixture preferably does without a setting accelerator. A setting accelerator is understood to be an admixture that is added in order to reduce the initial setting time as defined in the European Standard EN-934-2 of August 2012. In particular, the dry cementitious mixture may be free from calcium formate, calcium chloride, calcium nitrite and sodium carbonate.

Preferably. the fine mineral component comprises, or consists of, ground or precipitated calcium carbonate (e.g. limestone), silica fume, or mixtures thereof. Examples of a suitable fine mineral components are Durcal 1^{™} (Omya France), Socal^{®} 31 (an ultrafine precipitated calcium carbonate by Imerys), BL200 (Omya France) and Betocarb-UF-GU (Omya France).

The presence of the fine mineral brings a better CO₂ footprint by allowing the use of a lower clinker content while keeping the right paste volume that is necessary for additive manufacturing.

According to the invention, the fine mineral component has a BET specific surface area of between 0.5 and 30 m²/g, preferably between 5 and 15 m²/g. The BET specific surface area is measured according to the standard ISO 9277:2010.

The at least one viscosity enhancing admixture is present in an amount of 0.01-1.5 % by weight, preferably 0.1-0.5 % by weight, based on the hydraulic cement. The indicated amount by weight represents the sum of all viscosity enhancing admixtures present in the dry mix. If only one single viscosity enhancing admixture is present in the mix, said single admixture is present in an amount of, e.g., 0.01-1.5 % by weight based on the hydraulic cement. If two or more viscosity enhancing admixtures are present in the dry mix, the total amount of said two or more admixtures represents 0.05-1.5 % by weight based on the hydraulic cement.

The clay component of the dry cementitious material mixture is present in an amount of 0.01-5.0 % by weight, preferably 0.5-1 % by weight, based on the hydraulic cement. As with the viscosity enhancing admixture, the indicated amount by weight represents the sum of all clay types present in the dry mix.

The combined amount of the fine mineral component and the additional material present in the dry mix is selected in order to allow pumping of the fresh mortar or concrete to the deposition head on the one hand and to ensure that a layer of placed material has a sufficient stability in order not to collapse under its own weight or the weight of subsequent layer(s) placed on top. The combined amount of the fine mineral component and the additional material in the dry mix may preferably be selected in order to achieve a yield stress of 0.5-1.5 kPa, preferably 0.5-3 kPa, immediately after placing the fresh mortar or concrete composition through a deposition head. The combined amount of the fine mineral component and the additional material present in the dry mix may also preferably be selected in order to achieve a yield stress of 3-5 kPa measured at 30 minutes after the placing of the fresh mortar or concrete by a deposition head.

The addition of the viscosity enhancing admixture according to the invention results in that the increased yield stress property is attained almost instantly after placement, that is to say before the setting has occurred. Therefore, the increase in yield stress that is achieved by the viscosity enhancing admixture is independent from the setting process of the hydraulic cement of the construction material.

The dry mixture contains a hydraulic cement, which is a hydraulic binder comprising at least 50 wt.-% of CaO and SiO₂ that sets due to a chemical hydration reaction between the dry ingredients and water. The hydraulic cement may contain other components in addition to CaO and SiO₂. Various mineral additions, such as, e.g., silica fume, granulated blast-furnace slag (gbfs), fly ash, natural pozzolans, calcined clays or ground limestone, may be added to Portland cement, in order to obtain Portland composite cements. The mineral additions, typically between 10 and 50 wt.-% of the total weight of the hydraulic cement, are in most applications ground granulated blast furnace slag, fly ash, pozzolans, ground limestone or mixtures thereof. The addition of silica fume can be of particular benefit for the production of high strength 3d printed mortar or concrete, i.e. having a compressive strength at 28 days of at least 70 MPa.

Preferably, the hydraulic cement is composed of Portland cement mixed with any mineral addition described in the cement standard EN197-1 of April 2012. More preferably, the hydraulic cement comprises at least 5 wt.-% of Portland clinker.

The mineral additions contained in the hydraulic cement and the fine material component that is added for enhancing the yield stress might in specific cases be the same type of mineral, such as limestone or silica fume, and might therefore not be distinguishable in the dry mixture. In this case, the portion of this material that has a BET-specific surface area in the range of 0.5-30 m²/g, preferably 5-15 m²/g, is considered to be the added fine material component.

The hydraulic cement may also be a fine or an ultrafine cement, i.e. a hydraulic cement that is ground to a higher fineness than standard hydraulic cements. The fineness can for example be higher that 5000 cm²/g and reach values up to 13000 cm²/g or even 15000 cm²/g (expressed as cement Blaine fineness).

According to a preferred embodiment, the dry cementitious material mixture does not contain any aluminate cement, such as calcium aluminate cement. Alternatively, aluminate cement such as calcium aluminate cement or a calcium sulfoaluminate cement, may be present in an amount of < 5 % by weight, preferably < 2.0 % by weight, based on the total amount of hydraulic cement.

According to a preferred embodiment, the hydraulic cement comprises Portland cement and an aluminate cement, wherein said Portland cement is present in an amount of > 90 % by weight based on the total amount of hydraulic cement and said aluminate cement is present in an amount of < 5 % by weight, preferably in an amount of < 2 % by weight, based on the total amount of hydraulic cement.

Calcium aluminate cements are cements consisting predominantly of hydraulic calcium aluminates. Alternative names are "aluminous cement", "high-alumina cement" and "Ciment fondu" in French. Calcium aluminate cements have a short initial setting time, so that they are considered less preferred. A hydraulic cement having a short initial setting time will increase the risk that material builds up in the deposition head. Further, a short initial setting time may reduce the bonding strength between the layers placed on above the other, because the preceding layer may not be fresh any more when a subsequent layer is placed. Limiting the content of calcium aluminate cement is also preferred in terms of costs, since calcium aluminate cement is relatively expansive.

Generally, the initial setting time is defined as the time elapsed between the moment water is added to the cement to the time at which the cement paste starts losing its plasticity. In particular, the initial setting time is the time period between the time water is added to the cement and the time at which a 1 mm square section needle fails to penetrate the cement paste, placed in the Vicat's mould 5 mm to 7 mm from the bottom of the mould.

Preferably, the hydraulic cement present in the dry mix consists of Portland cement, i.e. the dry mix does not contain any hydraulic binder other than Portland cement. Portland cement is a cement of the type CEM I as described according to the European EN 197-1 Standard of April 2012.

Other suitable cements that may be used in the invention comprise the cements of the types CEM II, CEM III, CEM IV or CEM V described according to the European EN 197-1 Standard of April 2012.

According to another embodiment of the invention, the hydraulic cement comprises, or consists of, Portland cement and an aluminate cement, wherein said aluminate cement is present in an amount of < 5 % by weight, preferably in an amount of < 2.0 % by weight, based on the total amount of hydraulic cement.

According to a preferred embodiment of the invention, the hydraulic cement has a specific surface (Blaine) of 3000 - 8000 cm²/g, preferably 3500 - 6000 cm²/g.

According to a preferred embodiment, the at least one viscosity enhancing admixture is based on organic material such as unmodified polysaccharides (such as guar gum, diutan gum, or xanthan gum) or modified polysaccharides (such as cellulose ether, starch ether, or guar ether), acrylic polymers (such as ethoxylated urethane, alkali swellable emulsion, or copolymers of acrylic acid). As used herein, the term "viscosity enhancing admixture" does not include clay. Good results have been achieved with cellulose having a molecular weight between 400 and 20000 g/mol, and in particular Mecellose^{®} HiEND 2001 by LOTTE Fine Chemical, which is a cellulosic thickener that provides good adhesion strength between the extruded layers, viscosity, workability, and good water retention.

According to a preferred embodiment, the clay is selected from sepiolite, attapulgite, bentonite, montmorillonite, hectorite, saponite, smectite, kaolinite, laponite and wollastonite, preferably from sepiolite and attapulgite.

Further, it has been observed, that using the fine mineral component in combination with the additional material (i.e. the viscosity enhancing admixture or the clay), optimizes the thixotropic behavior or the fresh mortar or concrete composition such that the yield stress, after having paused mixing and/or conveying the fresh mortar or concrete composition, again decreases to the original range of 0.5-1.5 kPa upon remixing.

The yield stress is measured with a scissometer. A scissometer consists of a pale vane that has a diameter of 33 mm and a height of 50 mm. This pale is plunged into the material to be tested and to which an increasing torque is applied. When a failure occurs in the material, the vane starts to rotate, generally as the torque reaches its maximum value, which is considered as the characteristic value that is representative of the yield stress of the material.

Preferably, the dry cementitious material mixture further comprises fibers, preferably plastic fibers or cellulose fibers. Fibers have the effect of increasing the tensile strength of the mortar or concrete once hardened.

Even more preferably, cellulose fibers are used. Cellulose fibers are preferred because of their ability to retain water and increasing the robustness of the system as regards variations of the quantity of water (water/cement ratio). This means that small variations of the effective water/cement ratio in operations do not compromise the quality of the printing. Cellulose fibers also facilitate printing processes in hot weather by binding water which is less susceptible to evaporate.

In order to enhance the conveyability or pumpability of the fresh mortar or concrete to the deposition head, the dry cementitious material mixture may further comprise a plasticizer or superplasticizer, preferably a plasticizer based on polycarboxylate or phosphonates. The presence of a plasticizer or a superplasticizer increases the workability at a given amount of water.

Good results have been achieved with the following types of superplasticizers: ViscoCrete^{®} 520 P by Sika, a high-performance superplasticizer and water reducer in powder form, based on polycarboxylate (PCE).

Preferably, the superplasticizer is present in an amount of 0.01-0.2 % by weight of the dry content of the superplasticizer relative to the total amount of hydraulic cement. The preferred dosage of the type of plasticizer or superplasticizer depends on its type, on the type of cement and on the desired flow of the mortar.

In another embodiment, the plasticizer or the superplasticizer can be added diluted into the mixing water instead of added to the dry premix.

Optionally, the dry cementitious material mixture comprises additional commercial admixtures such a shrinkage reducing agents, pigments, or air entrainers.

According to a preferred embodiment of the invention the aggregates consist of particles having a maximum particle size of 30mm, preferably a maximum particle size of 16mm.

Preferably, the aggregates comprise fine aggregates, such as sand and microsand. Sand is defined as having a maximum particle size of 4mm, and microsand as having a maximum particle size of 1mm.

Preferably, the aggregates are present in an amount of 50-75 % by weight based on the dry cementitious material mixture (including aggregates).

Accordingly, the hydraulic cement is present in an amount of 20-45 % by weight based on the dry cementitious material mixture (including aggregates).

According to a second aspect, the invention provides a fresh mortar or concrete composition for 3D-printing, obtainable by mixing the dry cementitious material according to the invention and water. Preferably, the amount of water is selected so as to obtain a weight ratio of water/hydraulic cement of 0.25-0.90, preferably 0.25-0.60.

The fresh mortar or concrete composition of the second aspect of the invention may be obtained by mixing a dry cementitious material according to the invention with water. Alternatively, the fresh mortar composition can be obtained by separately preparing i) a dry cementitious material according to the invention that does not yet contain the viscosity enhancing admixture or the clay and ii) water that has been mixed with viscosity enhancing admixture (preferably being in fluid form) or the clay, and by mixing both components to obtain the fresh mortar composition. Alternatively, the fresh mortar or concrete composition can be obtained by mixing the dry cementitious material according to the invention that does not yet contain the viscosity enhancing admixture or the clay with water, convey the fresh mortar or concrete composition to a deposition head of a 3D-printing assembly and adding the viscosity enhancing admixture or the clay to the deposition head for being mixed with the fresh mortar or concrete composition prior to being deposited.

According to a third aspect of the invention a method of placing a fresh mortar or concrete composition for building structural components layer-by-layer, such as for 3D printing is provided, said method comprising:
providing a fresh mortar or concrete composition according to the second aspect of the invention,
placing the fresh mortar or concrete composition through an extrusion nozzle of a deposition head in order to form a layer of construction material.

As mentioned above, the method preferably uses the dry material mixture according to the first aspect of the invention, the method comprising the additional steps of:
mixing the dry cementitious material mixture with water and optionally aggregates (if the aggregates are not already contained in the dry cementitious material mixture) to obtain the fresh mortar or concrete composition,
conveying, preferably pumping, the fresh mortar or concrete composition to the deposition head.

Thus, the method provides an easy procedure for 3D printing a cementitious material, wherein all components are contained in the dry cementitious material mixture, which only needs to be mixed with water and optionally with aggregates and placed via a deposition head of a robot. In particular, no admixtures need to be added once the dry cementitious material mixture has been mixed with water. In particular, no admixtures are added to the fresh mortar or concrete composition in or at the deposition head.

Alternatively, the method comprises the following additional steps:
providing a dry cementitious material mixture of the first aspect of the invention that does not contain the viscosity enhancing admixture or the clay,
mixing the dry cementitious material mixture with water and optionally with aggregates (if the aggregates are not already contained in the dry cementitious material mixture) to obtain the fresh mortar or concrete composition,
conveying, preferably pumping, the fresh mortar or concrete composition to the deposition head,
adding the viscosity enhancing admixture and the clay to the deposition head and mixing the same with the fresh mortar or concrete composition.

A preferred mode of operation consists in that, after the placement of a first layer of the fresh mortar or concrete composition, at least one subsequent layer of the fresh mortar or concrete composition is placed onto the first layer, wherein the amount of viscosity enhancing admixture or of clay is selected so as to achieve a yield stress that is sufficient so that the first layer does not collapse and/or does not deform under the load of said at least one subsequent layer.

In this connection, "not collapsing" means that the height of the layer is not reduced by more than 10%, preferably more than 5%, under the load of the at least one subsequent layer.

"Not deforming" means that the layers maintain their shape as extruded until setting occurs.

Preferably, the flowable construction material has a yield strength of 0.5-1.5 kPa, preferably 0.5-3.0 kPa, when being placed.

The step of mixing water with the dry cementitious material mixture may be performed by means of a continuous mixer or by means of a batch mixer.

Preferably, warm water having a temperature of 20-30°C may be used in the mixing step for the preparation of the fresh mortar or concrete composition, if required, in particular in case of outside 3D printing in cold weather.

Preferably, the amount of water mixed with the dry cementitious material mixture is selected to obtain a water/hydraulic cement weight ratio of 0.25-0.90, preferably 0.25-0.60.

The invention will now be described in more detail by reference to the following examples.

### Examples

In the following examples various dry cementitious material mixtures were provided, which were used for preparing mortar. The mortar was prepared according to the following procedure:
- using a standard Perrier mortar mixer
- add all powder components into the mixer
- mixing the powder with low speed (140r/min) for 2 minutes
- adding water within 15 seconds while keeping on mixing for 2 minutes

The following components were used in the dry cementitious material mixtures described below. All components are in powder form:

| **Component** | **Type** | **Supplier / Origin** |
|---|---|---|
| CEM I 52,5N CE CP2 | Ordinary Portland Cement | Saint Pierre La Cour cement plant, Lafarge France |
| 0/1.6 Cassis | Natural aggregates, mean particle size up to 1.6 mm | Cassis quarry, France |
| 1.6/3 Cassis | Natural aggregates, mean particle size between 1.6 mm and 3 mm | Cassis quarry, France |
| Viscocrete 520 P | Superplasticizer | Sika |
| Mecellose Hiend 2001 | Viscosity enhancing admixture | Lotte Fine Chemical |
| Cimsil A-45 | Clay of the sepiolite type | TOLSA S.A. |

Further, the following types of fine mineral component (all being calcium carbonate) were used:

| **Product name** | **Density (g/cm³)** | **Particle size distribution** | **Specific surface Blaine (cm²/g)** | **Specific surface BET (m²/g)** | **Supplier** |
|---|---|---|---|---|---|
| BetoCarb | 2.72 | D₁₀=0.1µm | 22,280 | 7.75 | Omya |
| UF-GU | | D₅₀=1.1µm | | | |
| | | D₉₀=3.2µm | | | |
| | | D(_{4,3})=1.4µm | | | |
| BL200 | 2.71 | D₁₀=2.9µm | 4, 010 | 0.75 | Omya |
| | | D₅₀=8.2µm | | | |
| | | D₉₀=27.7µm | | | |
| | | D(_{4,3})=12.3µm | | | |
| Durcal 1 | 2.71 | D₁₀=0.4µm | 16,250 | 5.55 | Omya |
| | | D₅₀=2.5µm | | | |
| | | D₉₀=6.8µm | | | |
| | | D(_{4,3})=3.2µm | | | |
| Socal31 | 2.68 | D₁₀=0.1µm | 50,450 | 20.80 | Imerys |
| | | D₅₀=1.6µm | | | |
| | | D₉₀=25.3µm | | | |
| | | D(_{4,3})=7.7µm | | | |

### Example 1

The four following fresh mortar formulations were prepared to show the effect of the combined use of a fine mineral component (Durcal 1) and a viscosity enhancing admixture (Mecellose Hiend 2001):

| **Formulation #** | #1 | | #2 | |
|---|---|---|---|---|
| | kg/m³ | kg/t | kg/m³ | kg/t |
| **CEM I 52,5N CE CP2** | 554.0 | 285.4 | 554.0 | 286 |
| **Durcal 1** | 100.0 | 51.5 | - | - |
| **0/1.6 Cassis** | 919.0 | 473.5 | 987.0 | 509.5 |
| **1.6/3 Cassis** | 367.6 | 189.4 | 394.8 | 203.8 |
| **Water (eff)** | 305.0 | | 305.0 | |
| **Viscocrete 520 P** | 0.444 | 0.229 | 0.443 | 0.229 |
| **Mecellose Hiend 2001** | - | - | 0.830 | 0.428 |
| **Cimsil A-45** | - | - | - | - |
| | | | | |

| **Formulation #** | #3 | | #4 | |
|---|---|---|---|---|
| | kg/m³ | kg/t | kg/m³ | kg/t |
| **CEM I 52,5N CE CP2** | 554.0 | 285.7 | 554.0 | 245.4 |
| **Durcal 1** | 100.0 | 51.6 | 100.0 | 44.3 |
| **0/1.6 Cassis** | 917.0 | 472.9 | 917.0 | 406.2 |
| **1.6/3 Cassis** | 366.8 | 189.2 | 366.8 | 162.5 |
| **Water (eff)** | 305.0 | | 305.0 | 135.1 |
| **Viscocrete 520 P** | 0.444 | 0.229 | 0.444 | 0.197 |
| **Mecellose Hiend 2001** | 0.830 | 0.428 | 0.830 | 0.368 |
| **Cimsil A-45** | - | - | 1.196 | 0.530 |

In the above table, the kg/t unit relates to kg dry material per ton of dry mix mortar (water excluded). Further, to keep as much consistency as possible, the addition of Durcal 1 was compensated by the decrease of 0/1.6 Cassis and 1.6/3 Cassis aggregates quantities in the formulation, such that the quantity of cement stayed constant from one formulation to another. In all formulations, the ratio of water/hydraulic cement (W/C) was 0.55 and the ratio of water/powder (W/P) was 0.157.

Formulation no. 3 contains a fine mineral component and a viscosity enhancing admixture and corresponds to the invention, while the other formulations are reference examples.

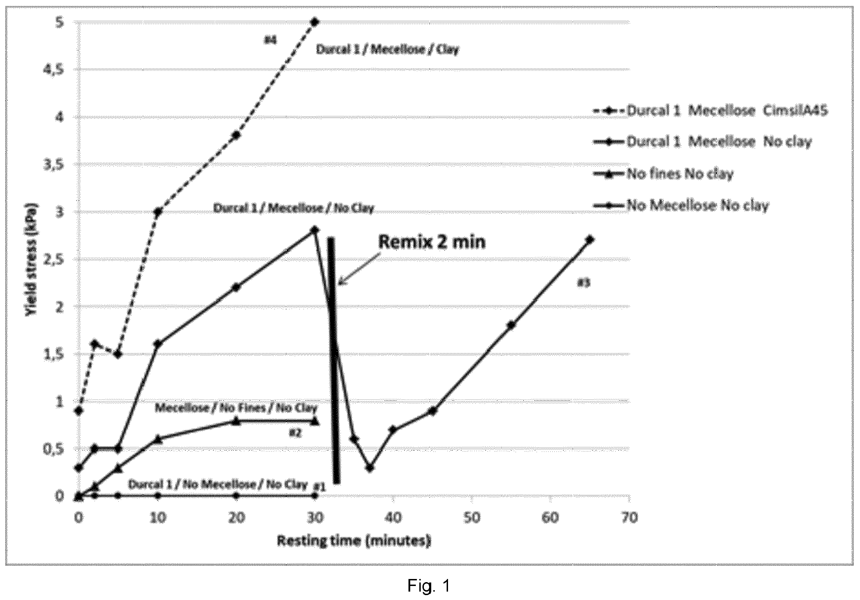

Fig. 1 shows the yield stress development observed with the formulations #1, #2, #3 and #4 as a function of the resting time.

The yield stress is measured with a scissometer. A scissometer consists of a pale vane that has a diameter of 33 mm and a height of 50 mm. This pale is plunged into the material to be tested and to which an increasing torque is applied. When a failure occurs in the material, the vane starts to rotate, generally as the torque reaches its maximum value, which is considered as the characteristic value that is representative of the yield stress of the material.

The results of the yield stress measurements of Fig. 1 show that there is a synergistic effect of using both, a fine mineral component and a viscosity enhancing admixture. While formulation #1 that contains only a fine mineral component, but no a viscosity enhancing admixture has no yield stress and formulation #2 that contains only a viscosity enhancing admixture, but no fine mineral addition has little yield stress, formulation #3 that contains a viscosity enhancing admixture as well as a fine mineral component results in a yield stress that is considerable higher than the sum of the yield stress of formulations #1 and #2. The synergistic effect is observed both, for the initial yield stress measured immediately after deposition of the fresh mortar and the yield stress measured after 30 minutes.

Fig. 1 also shows the development of yield stress of formulation no. 3 over an extended period of time, wherein a remixing step has been carried out after 30 minutes, in order to assess the thixotropic behavior. After first 30 minutes, the mixtures were mixed again for 2 minutes (Perrier mixer, PV-small speed). As a result of the mixing process, the yield stress broke down to values comparable to those measured initially. It then increased to reach previous values in a similar amount of time.

### Example 2

Additional tests have been done to assess the influence of the type of the fine mineral component on the yield stress development over time. The following formulations are based on the formulation #3 above, with the type of fine mineral component having been varied. To keep as much consistency as possible, the varying amounts of the fine mineral component was compensated by the adjustments of 0/1.6 Cassis and 1.6/3 Cassis aggregates quantities in the formulation, such that the quantity of cement stayed constant from one formulation to another.

| **Formulation #** | #5 | |
|---|---|---|
| | kg/m³ | kg/t |
| **CEM I 52,5N CE CP2** | 554.0 | 285.5 |
| **Durcal 1** | 150.0 | 77.3 |
| **0/1.6 Cassis** | 882.0 | 454.6 |
| **1.6/3 Cassis** | 353.0 | 181.9 |
| **Water (eff)** | 305.0 | |
| **Viscocrete 520 P** | 0.444 | 0.228 |
| **Mecellose Hiend 2001** | 0.830 | 0.428 |
| **Cimsil A-45** | - | - |

| **Formulation #** | #6 | |
|---|---|---|
| | kg/m³ | kg/t |
| **CEM I 52,5N CE CP2** | 554.0 | 285.8 |
| **Socal 31** | 50.0 | 25.8 |
| **0/1.6 Cassis** | 952.0 | 491.2 |
| **1.6/3 Cassis** | 381.0 | 196.6 |
| **Water (eff)** | 305.0 | |
| **Viscocrete 520 P** | 0.444 | 0.229 |
| **Mecellose Hiend 2001** | 0.830 | 0.428 |
| **Cimsil A-45** | - | - |

| **Formulation #** | #7 | |
|---|---|---|
| | kg/m³ | kg/t |
| **CEM I 52,5N CE CP2** | 554.0 | 285.5 |
| **BL200** | 150.0 | 77.3 |
| **0/1.6 Cassis** | 882.0 | 454.6 |
| **1.6/3 Cassis** | 353.0 | 181.9 |
| **Water (eff)** | 305.0 | |
| **Viscocrete 520 P** | 0.444 | 0.228 |
| **Mecellose Hiend 2001** | 0.830 | 0.428 |
| **Cimsil A-45** | - | - |

| **Formulation #** | #8 | |
|---|---|---|
| | kg/m³ | kg/t |
| **CEM I 52,5N CE CP2** | 554.0 | 285.7 |
| **BetoCarb UF-GU** | 100.0 | 51 . 6 |
| **0/1.6 Cassis** | 917.0 | 472.9 |
| **1.6/3 Cassis** | 367.0 | 189.2 |
| **Water (eff)** | 305.0 | |
| **Viscocrete 520 P** | 0.444 | 0.228 |
| **Mecellose Hiend 2001** | 0.830 | 0.428 |
| **Cimsil A-45** | - | - |

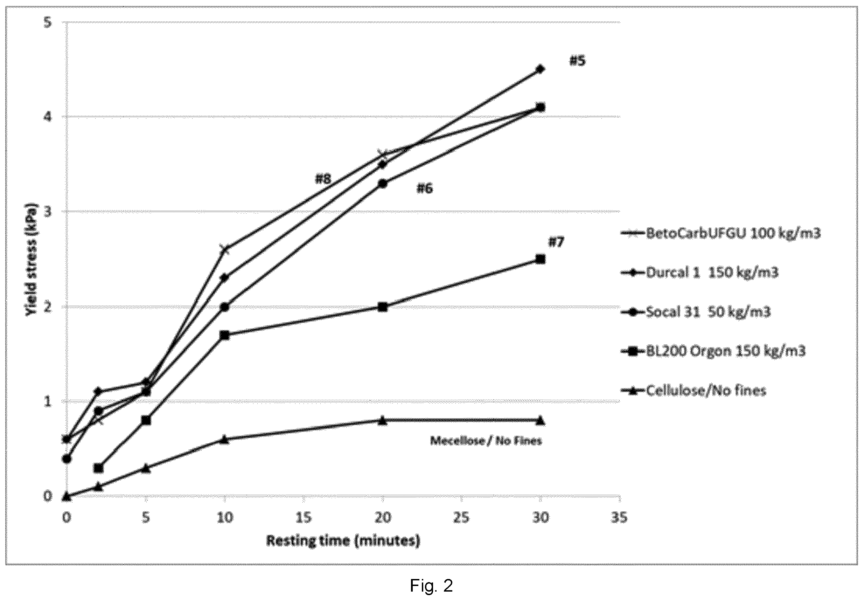

Fig. 2 shows the yield stress development measured with formulations #5, #6, #7 and #8 compared to the yield stress obtained with formulation #2. It can be seen that different types of fine minerals provide higher initial yield stress and better yield stress development than formulation #2. In this example, the impact of particle size/specific surface area of the fine mineral component becomes apparent. Most curves (except that of BL200, due to limited testing performed) overlay, although fine minerals dose rate varies from one to another, thus showing the finer the added mineral, the lower its dose rate to achieve a given yield stress.

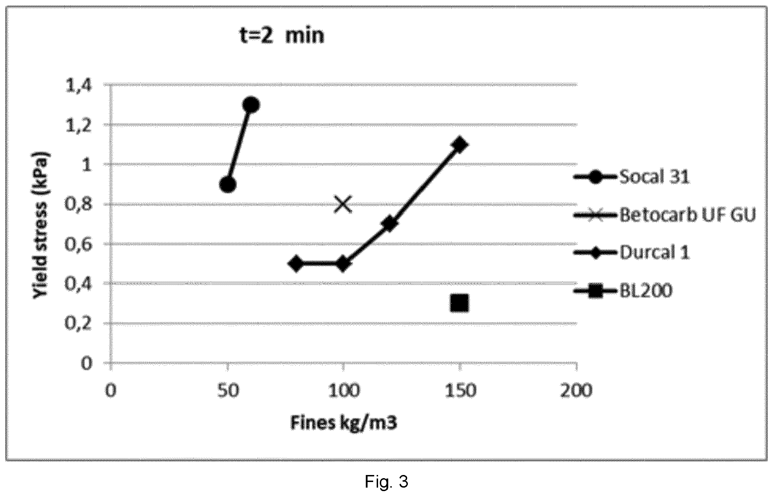

Fig. 3 shows the yield stress at 2 minutes after placing the fresh mortar as a function of the amount of fine mineral component present in the fresh mortar. This confirms that the finer the fine mineral component is, the less is needed in order to obtain the required yield stress. In particular, only about 50 kg/m³ of the product Socal 31, having the highest BET specific surface area (20.80 m²/g), is needed, while about 150 kg/m³ of the product BL200, having the lowest BET specific surface area (0.75 m²/g, respectively), is needed in order to obtain a similar effect. In other words, the finer the fine mineral component, the higher the yield stress at a specific constant content of the fine mineral component.

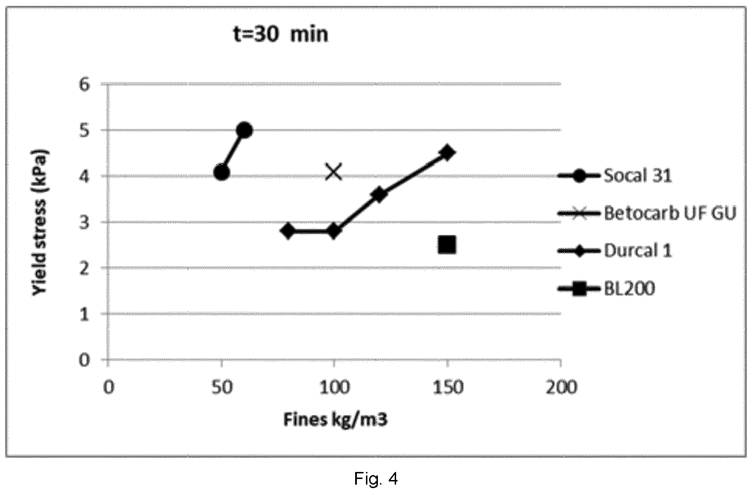

Fig. 4 shows the yield stress at 30 minutes after placing the fresh mortar as a function of the amount of fine mineral component present in the fresh mortar. The same conclusions can be drawn as with Fig. 3.

### Example 3

The three following fresh mortar formulations were prepared to show the effect of the combined use of a fine mineral component (Durcal 1) and clay (Cimsil A-55):

| **Formulation #** | #9 | #10 | #11 |
|---|---|---|---|
| | kg/m³ | kg/m³ | Kg/m³ |
| **CEM I 52,5N CE CP2** | 553.6 | 500.0 | 450.0 |
| **Durcal 1** | - | 46.5 | 90.4 |
| **0/1.6 Cassis** | 977.0 | 1039.0 | 1095.0 |
| **1.6/3 Cassis** | 390.8 | 415.6 | 438.0 |
| **Water (eff)** | 304.5 | 275.0 | 247.5 |
| **Viscocrete 520 P** | 0.443 | 0.437 | 0.432 |
| **Mecellose Hiend 2001** | - | - | - |
| **Cimsil A-45** | 12.18 | 6.284 | 1.351 |
| **W/C ratio** | 0.55 | 0.55 | 0.55 |
| **W/P ratio** | 0.157 | 0.137 | 0.119 |

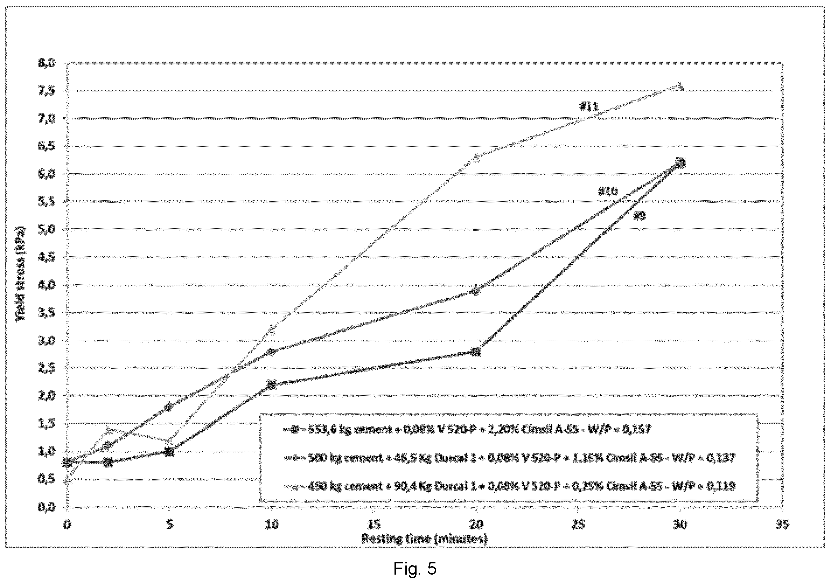

Fig. 5 shows the yield stress development observed with the formulations #9, #10 and #11 as a function of the resting time. It can be seen that formulation #9, which comprises clay, but no fine mineral component, results in a yield stress that increases with time, but the kinetics is quite slow. Adding a fine mineral component (formulations #10 and #11), thus combining fine minerals and clay, promotes a steeper yield stress development with time. In this case, a lower clay dose rate is needed to achieve the targeted initial yield stress.

### Example 4

The following examples show that the presence of a fine mineral component according to the invention may have an acceleration effect on the setting time of the mortar. The following fresh mortar formulations have been prepared and the Vicat initial setting time was measured.

| | **Durcal 1 150 kg/m3** | | **Socal 31 60 kg/m3** | | **BetoCarb UF-GU 100 kg/m3** | | **Ref VMA/clay No fines No accelerator** | | **Ref VMA/clay No fines With accelerator** | |
|---|---|---|---|---|---|---|---|---|---|---|
| W/C | 0,59 | | 0.55 | | 0.55 | | 0.55 | | 0.55 | |
| W/P | 0.157 | | 0.157 | | 0.157 | | 0.157 | | 0.157 | |

| | kg/m3 | kg/t dry mix | kg/m3 | kg/t dry mix | | kg/t dry mix | kg/m3 | kg/t dry mix | kg/m3 | kg/t dry mix |
|---|---|---|---|---|---|---|---|---|---|---|
| Cement CEM I 52,5N CE CP2 SPLC | 516,1 | 266,8 | 553,6 | 285,7 | 553,6 | 285,5 | 553,6 | 285,9 | 553,6 | 286,7 |
| Fine mineral | **150,0** | 77,5 | **60,0** | 31,0 | **100,0** | 51,6 | | | | |
| 0/1.6 Cassis | 905,0 | 467,9 | 945,0 | 487,6 | 917,0 | 473,0 | 984,0 | 508,2 | 971,0 | 502,9 |
| 1.6/3 Cassis | 362,0 | 187,1 | 378,0 | 195,1 | 367,0 | 189,3 | 393,6 | 203,3 | 388,4 | 201,2 |
| | 305,0 | | 305,0 | | 305,0 | | 305,0 | | 305,0 | |
| Viscocrete 520P | 0,444 | 0,230 | 0,443 | 0,229 | 0,443 | 0,228 | 0,443 | 0,229 | 0,443 | 0.229 |
| Mecellose Hiend 2001 | 0,830 | 0,429 | 0,830 | 0,428 | 0,830 | 0,428 | 0,830 | 0,429 | 0,830 | 0,430 |
| Cimsil A-45 | | | | | | | 3,600 | 1,859 | 3,600 | 1,865 |
| Calcium formiate | | | | | | | | | 12,900 | 6,681 |
| **Vicat set: start time** | **161 min** | | **150 min** | | **168 min** | | **278 min** | | **155 min** | |

The results show that the combination of a fine mineral component and a viscosity enhancing admixture, in particular a cellulosic thickener (Mecellose Hiend 2001), has a similar setting accelerating effect as a traditional setting accelerator, such as calcium formiate.

To achieve a given setting time, no accelerator was needed in the formulations comprising fine minerals, while reference formulations (no fines) required calcium formiate.

## Claims

1. A dry cementitious material mixture for 3D-printing, comprising:
- a hydraulic cement,
- a fine mineral component having a BET-specific surface area of 0.5-30 m²/g, preferably 5-15 m²/g, and being present in an amount of 3-50 %, preferably 3-30 %, by weight based on the hydraulic cement,
- an additional material being one of:
- at least one viscosity enhancing admixture being present in an amount of 0.01-1.5 % by weight, preferably 0.1-0.5 % by weight, based on the hydraulic cement,
- clay being present in an amount of 0.01-5.0 %, preferably 0.5-1 %, by weight based on the hydraulic cement,
- optionally aggregates.

2. Dry cementitious material mixture according to claim 1, wherein the fine component comprises, or consists of, calcium carbonate, silica fume, or mixtures thereof.

3. Dry cementitious material mixture according to claim 1 or 2, wherein the hydraulic cement consists of Portland cement.

4. Dry cementitious material mixture according to claim 1 or 2, wherein the hydraulic cement comprises Portland cement and an aluminate cement, wherein said Portland cement is present in an amount of > 90 % by weight based on the total amount of hydraulic cement and said aluminate cement is present in an amount of < 5 % by weight, preferably in an amount of < 2 % by weight, based on the total amount of hydraulic cement.

5. Dry cementitious material mixture according to any one of claims 1 to 4, wherein the dry cementitious mixture is free from an accelerator.

6. Dry cementitious material mixture according to any one of claims 1 to 5, wherein the at least one viscosity enhancing admixture comprises of consist of,
- unmodified polysaccharides, such as guar gum, diutan gum, or xanthan gum, or
- modified polysaccharides, such as cellulose ether, starch ether, or guar ether, or
- acrylic polymers, such as ethoxylated urethane, alkali swellable emulsion, or copolymers of acrylic acid.

7. Dry cementitious material mixture according to any one of claims 1 to 6, wherein the clay is selected from sepiolite, attapulgite, bentonite, montmorillonite, hectorite, saponite, smectite, kaolinite, laponite and wollastonite, preferably from sepiolite and attapulgite.

8. Dry cementitious material mixture according to any one of claims 1 to 7, wherein the dry cementitious material mixture further comprises fibers, preferably plastic fibers.

9. Dry cementitious material mixture according to any one of claims 1 to 8, further comprising a superplasticizer, preferably being present in an amount of 0.01-0.2 % by weight of the dry content of the superplasticizer relative to the total amount of hydraulic cement.

10. Dry cementitious material mixture according to any one of claims 1 to 9, containing aggregates that consist of particles having a maximum particle size of 30mm, preferably a maximum particle size of 16mm.

11. Dry cementitious material mixture according to claim 10, wherein the aggregates comprise fine aggregates, such as sand, having a maximum particle size of 4mm, and/or microsand, having a maximum particle size of 1mm.

12. Dry cementitious material mixture according to any one of claims 1 to 11, wherein the hydraulic cement is present in an amount of 20-45 % by weight based on the dry cementitious material mixture.

13. A fresh mortar or concrete composition for 3D-printing, obtainable by mixing the dry cementitious material mixture according to any one of claims 1 to 12 and water.

14. A method of placing a fresh mortar or concrete composition for building structural components layer-by-layer, such as for 3D mortar printing, said method comprising:
providing a fresh mortar or concrete composition according to claim 13,
placing the fresh mortar or concrete composition through an extrusion nozzle of a deposition head in order to form a layer of construction material.

15. Method according to claim 14, further comprising:
providing a dry cementitious material mixture according to any one of claims 1 to 12,
mixing the dry cementitious material mixture with water and optionally aggregates to obtain the fresh mortar or concrete composition,
conveying, preferably pumping, the fresh mortar or concrete composition to the deposition head.

16. Method according to claim 14, further comprising:
providing a dry cementitious material mixture as defined in any one of claims 1 to 12 that does not contain the viscosity enhancing admixture and the clay,
mixing the dry cementitious material mixture with water and optionally with aggregates to obtain the fresh mortar or concrete composition,
conveying, preferably pumping, the fresh mortar or concrete composition to the deposition head,
adding the viscosity enhancing admixture or the clay to the deposition head and mixing the same with the fresh mortar or concrete composition.

17. Method according to any one of claims 14 to 16, wherein the amount of water mixed with the dry cementitious material mixture is selected to obtain a water/hydraulic cement weight ratio of 0.25-0.90, preferably 0.25-0.60.

18. Method according to any one of claims 14 to 17, wherein the fresh mortar composition has a yield strength of 0.25-4 kPa when being placed.
